(19) Europäisches Patentamt
European Patent Office
Office européen des brevets

(11) EP 4 531 130 A2

(12) EUROPEAN PATENT APPLICATION

(43) Date of publication:
**02.04.2025 Bulletin 2025/14**

(21) Application number: **24202293.7**

(22) Date of filing: **24.09.2024**

(51) International Patent Classification (IPC):
***H01M 4/13*** *(2010.01)* ***H01M 10/0567*** *(2010.01)*
***H01M 10/0569*** *(2010.01)*

(52) Cooperative Patent Classification (CPC):
**H01M 10/0569; H01M 4/13; H01M 10/0567;**
H01M 2004/021

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311279914**

(71) Applicant: **Dongguan Amperex Technology Limited**
**Dongguan City, Guangdong Province 523000 (CN)**

(72) Inventors:
- **WANG, Rui**
**Dongguan City, Guangdong 523000 (CN)**
- **LU, Jianxin**
**Dongguan City, Guangdong 523000 (CN)**
- **TANG, Chao**
**Dongguan City, Guangdong 523000 (CN)**

(74) Representative: **Icosa**
**83 avenue Denfert-Rochereau**
**75014 Paris (FR)**

# (54) SECONDARY BATTERY AND ELECTRONIC DEVICE

(57) A secondary battery includes a positive electrode plate, a negative electrode plate, a separator and an electrolyte solution. A negative electrode plate includes a negative current collector and a negative material layer disposed on at least one surface of the negative current collector. A single-sided area density of the negative material layer is D g/1540.25 $mm^2$, $0.100 \leq D \leq 0.180$. The electrolyte solution includes fluoroethylene carbonate, and based on a mass of the electrolyte solution, a mass percentage of the fluoroethylene carbonate is A1%, $4.2 \leq A1 \leq 14.8$; and $25 \leq A1/D \leq 100$.

EP 4 531 130 A2

## Description

### TECHNICAL FIELD

This application relates to the technical field of electrochemistry, and in particular to a secondary battery and an electronic device.

### BACKGROUND

Secondary batteries (such as lithium-ion batteries) are widely used in smart phones, wearable devices, consumer-grade unmanned aerial vehicles, electric vehicles and other fields due to their advantages such as a high energy density, a long cycle life and no memory effect. With the widespread application of the lithium-ion batteries in the above fields, the market has increasingly higher requirements for the energy density and cycle life of the lithium-ion batteries.

In response to the demand for the high energy density, there have been more stringent requirements for the electrolyte solution retention capacity of the lithium-ion batteries, and how to ensure a longer cycle life of a lithium-ion battery with a lower electrolyte solution retention requirement is one of main research directions under the current demand for the high energy density.

### SUMMARY

The objective of this application is to provide a secondary battery and an electronic device to prolong the cycle life of the secondary battery. The specific technical solution is as follows:

A first aspect of this application provides a secondary battery, the secondary battery includes a positive electrode plate, a negative electrode plate, a separator and an electrolyte solution; the negative electrode plate includes a negative current collector and a negative material layer disposed on at least one surface of the negative current collector; and a single-sided area density of the negative material layer is D g/1540.25 $mm^2$, $0.100 \leq D \leq 0.180$. The electrolyte solution includes a fluoroethylene carbonate, and based on a mass of the electrolyte solution, a mass percentage of the fluoroethylene carbonate is A1%, $4.2 \leq A1 \leq 14.8$. The secondary battery satisfies: $25 \leq A1/D \leq 100$. In this application, by regulating the single-sided area density of the negative material layer and the content of the fluoroethylene carbonate within the above ranges, and enabling the two to satisfy the above proportional relationship, the distribution density of a negative active material, the stacking morphology of the negative active material in the negative electrode plate, and the infiltration trend of the fluoroethylene carbonate in the negative electrode plate can be controlled under synergy, which allows the negative active material at different depths from the surface of the negative electrode plate to come into uniform and sufficient contact with the fluoroethylene carbonate, so that a uniform SEI film with an appropriate thickness is formed on the surface of the negative active material to improve the stability of the negative active material during a cycle of the secondary battery, and reduce the electrolyte solution consumption during the cycle, thereby reducing the electrolyte solution retention requirement of the secondary battery. The secondary battery in this application has a long cycle life while having a high energy density and a low electrolyte solution retention capacity.

In an implementation solution of this application, the electrolyte solution further includes an ethylene carbonate, a propylene carbonate and a propyl propionate; based on the mass of the electrolyte solution, a sum of mass percentages of the ethylene carbonate and the propylene carbonate is S1%, and a mass percentage of the propyl propionate is S2%, $7 \leq S1 \leq 12$, and $30 \leq S2 \leq 70$. By regulating the sum of the mass percentages of the ethylene carbonate and the propylene carbonate within the range of this application, the ethylene carbonate and the propylene carbonate can come into uniform and sufficient contact with the negative active material at different depths from the surface of the negative electrode plate, which is conducive to forming a stable SEI film on the surface of the negative electrode plate, thereby prolonging the cycle life of the secondary battery. By regulating the mass percentage of the propyl propionate within the range of this application, the electrolyte solution has a low viscosity, which is conducive to diffusion of the electrolyte solution during the cycle, thereby prolonging the cycle life of the secondary battery.

In an implementation solution of this application, based on the mass of the electrolyte solution, a mass percentage of the ethylene carbonate M1 is 2% to 9.5%, and a mass percentage of the propylene carbonate M2 is 2% to 9.5%. Regulating the mass percentage of the ethylene carbonate M1 within the range of this application facilitates a synergistic effect of the ethylene carbonate and the fluoroethylene carbonate on the surface of the negative active material at different depths from the surface of the negative electrode plate, so that a highly tough SEI film rich in organic and inorganic composite components is formed to help suppress the consumption of the electrolyte solution during the cycle, thereby prolonging the cycle life of the secondary battery. Regulating the mass percentage of the propylene carbonate M2 within the range of this application is conducive to sufficient dissociation of a lithium salt in the electrolyte solution, and is beneficial for the negative active material at different depths from the surface of the negative electrode plate to come into

uniform contact with the lithium salt, which further achieves conduction of a lithium ion transmission path, so as to improve the film-forming quality of the fluoroethylene carbonate on the surface of the negative active material, thereby prolonging the cycle life of the secondary battery.

In an implementation solution of this application, $200 \leq S2/D \leq 650$. Regulating the value of S2/D within the range of this application is conducive to controlling the viscosity of the electrolyte solution within an appropriate range, which further achieves conduction of the lithium ion transmission path, so as to improve the film-forming quality of the fluoroethylene carbonate on the surface of the negative active material, thereby prolonging the cycle life of the secondary battery.

In an implementation solution of this application, the electrolyte solution further includes a compound having sulfur-oxygen double-bond, and the compound having sulfur-oxygen double-bond includes at least one selected from the group consisting of 1,3-propanesultone, ethylene sulfate, Prop-1-ene-1,3-sultone, 3-fluoro-1,3-propanesultone, 1,2-propane sultone, 1,4-butane sultone, 1,2-butane sultone, 1,3-butane sultone, 2,4-butane sultone and 1,3-pentane sultone. Based on the mass of the electrolyte solution, a mass percentage of the compound having sulfur-oxygen double-bond is S3%, $0.01 \leq S3 \leq 4.9$. Selecting the compound having sulfur-oxygen double-bond from the above types and regulating the mass percentage of the compound having sulfur-oxygen double-bond within the range of this application are conducive to improving the film-forming quality, thereby prolonging the cycle life of the secondary battery.

In an implementation solution of this application, $3 \leq S3/D \leq 4.6$. Regulating the mass percentage of the compound having sulfur-oxygen double-bond within the range of this application is conducive to prolonging the cycle life of the secondary battery.

In an implementation solution of this application, the electrolyte solution further includes a nitrile compound. The nitrile compound includes at least one selected from the group consisting of malononitrile, succinonitrile, glutaronitrile, adipic dinitrile, pimelonitrile, suberonitrile, 3,3'-oxydipropionitrile, hex-2-enedinitrile, fumaronitrile, 2-pentenedinitrile, methylglutaronitrile, 1,3,5-Pentanetricarbonitrile , (Z)-1,2-dicyanoethylene, 2,2,3,3-tetrafluorosuccinonitrile, ethylene glycol bis(propionitrile) ether, 1,3,6-hexanetricarbonitrile, 1,3,5-pentanetricarbonitrile, heptanedinitrile,4-(2-cyanoethyl)- and 1,2,3-tris(2-cyanoethoxy)propane; and based on the mass of the electrolyte solution, a mass percentage of the nitrile compound is S4%, and $2.6 \leq S4 \leq 8.2$. Selecting the nitrile compound from the above types and regulating the mass percentage of the nitrile compound within the range of this application are conducive to improving the stability of an electrode plate structure, thereby prolonging the cycle life of the secondary battery.

In an implementation solution of this application, the secondary battery satisfies at least one of the following conditions: (1) $4.2 \leq A1 \leq 8.5$; (2) $26.7 \leq A1/D \leq 66.7$; or (3) $32 \leq S2 \leq 59$. Selecting the secondary battery that satisfies at least one of the above conditions is conducive to prolonging the cycle life of the secondary battery.

In an implementation solution of this application, the secondary battery satisfies at least one of the following conditions: (1) $8.5 \leq A1 \leq 13.5$; (2) $55.6 \leq A1/D \leq 76.9$; or (3) $238 \leq S2/D \leq 580$. Selecting the secondary battery that satisfies at least one of the above conditions is conducive to prolonging the cycle life of the secondary battery.

In an implementation solution of this application, the electrolyte solution satisfies at least one of the following conditions: (1) the electrolyte solution includes adipic dinitrile and ethylene glycol bis(propionitrile) ether; (2) the electrolyte solution includes ethylene carbonate, propylene carbonate and succinonitrile; (3) the electrolyte solution includes ethylene sulfate and adipic dinitrile; or (4) the electrolyte solution includes ethylene carbonate, propylene carbonate and 1,3,6-hexanetricarbonitrile. Selecting the electrolyte solution that satisfies at least one of the above conditions is conducive to prolonging the cycle life of the secondary battery.

In an implementation solution of this application, the electrolyte solution further includes a compound of formula (I):

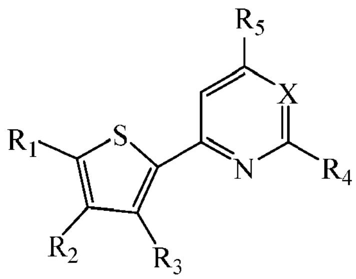

Formula (I)

wherein X is selected from $CR_6$ or N. $R_1$, $R_2$ and $R_3$ are each independently selected from a hydrogen atom, a halogen, a $C_2$ to $C_5$ carbonyl group, a $C_1$ to $C_5$ aldehyde group, an unsubstituted or Ra-substituted $C_1$ to $C_5$ alkyl group, an unsubstituted or Ra-substituted $C_2$ to $C_5$ alkenyl group, an unsubstituted or Ra-substituted $C_2$ to $C_5$ alkynyl group, an unsubstituted or

Ra-substituted $C_3$ to $C_5$ N-heterocyclic alkyl group, and a $C_3$ to $C_5$ N-heteroaryl group. $R_4$, $R_5$ and $R_6$ are each independently selected from a hydrogen atom, a $C_1$ to $C_5$ alkyl sulfide group, $C_2$ to $C_5$ thioether, a $C_3$ to $C_5$ N-heterocyclic alkyl group, a $C_3$ to $C_5$ N-heteroaryl group, an unsubstituted or Ra-substituted $C_1$ to $C_5$ alkyl group, an unsubstituted or Ra-substituted $C_2$ to $C_5$ alkenyl group, and an unsubstituted or Ra-substituted $C_2$ to $C_5$ alkynyl group. A substituent Ra of each group is independently selected from a halogen, a $C_1$ to $C_5$ aldehyde group, a $C_2$ to $C_5$ carbonyl group, a $C_2$ to $C_5$ ester group, a sulfonyl group, an amino group, and a $C_2$ to $C_5$ acylamino group or cyano group. Based on the total mass of the electrolyte solution, the mass percentage of the compound of formula (I) is S5%, wherein $0.01 \leq S5 \leq 5$. Selecting the compound of formula (I) from the above types and regulating the mass percentage of the compound of formula (I) within the range of this application facilitate a synergistic effect of the compound of formula (I) and fluoroethylene carbonate on the surface of the negative active material, so that a stable SEI film with an appropriate thickness and good ion diffusion performance is formed to reduce the consumption of the electrolyte solution during the cycle, thereby prolonging the cycle life of the secondary battery.

In an implementation solution of this application, the compound of formula (I) is selected at least one of from following compounds:

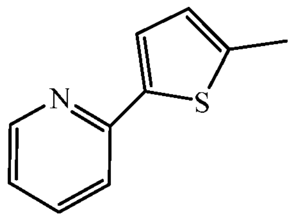
Formula (I-1)

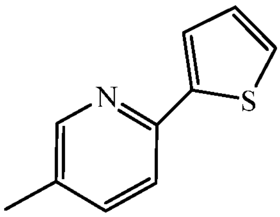
Formula (I-2)

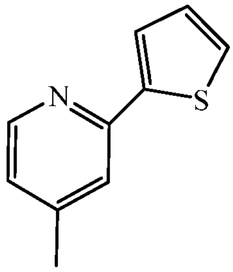
Formula (I-3)

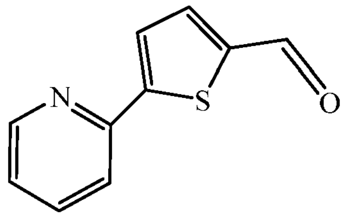
Formula (I-4)

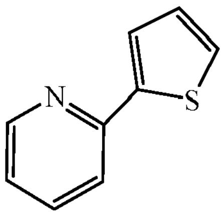
Formula (I-5)

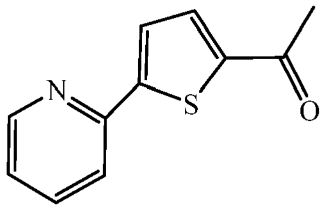
Formula (I-6)

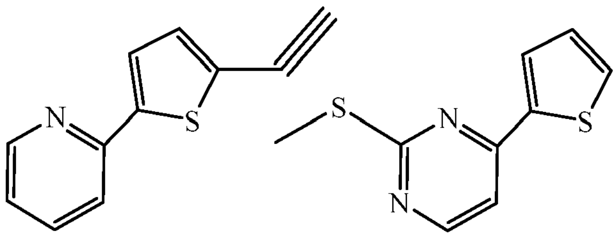
Formula (I-7)

Formula (I-8)

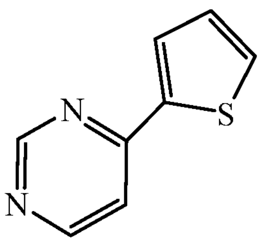
Formula (I-9)

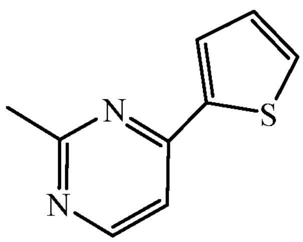
Formula (I-10)

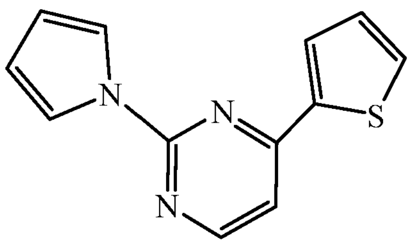
Formula (I-11)

Selecting the compound of formula (I) from the above types is conducive to forming a stable SEI film with an appropriate thickness and good ion diffusion performance on the surface of the active material to reduce the consumption of the electrolyte solution during the cycle, thereby prolonging the cycle life of the secondary battery.

In an implementation solution of this application, the negative material layer includes a negative active material, and a Dv50 of the negative active material is D1 $\mu$m, and $5 \leq D1 \leq 25$. Regulating the Dv50 of the negative active material within the above range is beneficial for the fluoroethylene carbonate to come into sufficient contact with the negative material, so that a compact SEI film is formed, thereby prolonging the cycle life of the secondary battery.

In an implementation solution of this application, the negative material layer includes a negative active material, and a Dv50 of the negative active material is D1 $\mu$m, and $8 \leq D1 \leq 15$. Regulating the Dv50 of the negative active material

within the above range is conductive to prolonging the cycle life of the secondary battery.

In an implementation solution of this application, $0.8 \leq D \times D1 \leq 3.4$. By regulating the value of $D \times D1$ within the above range of this application, the distribution density of the negative active material, the stacking morphology of the negative active material in the negative electrode plate, and the infiltration trend of the fluoroethylene carbonate in the negative electrode plate can be further controlled, thereby prolonging the cycle life of the secondary battery while taking into account the energy density of the secondary battery.

In an implementation solution of this application, $1 \leq D \times D1 \leq 3$. Regulating the value of $D \times D1$ within the above range prolongs the cycle life of the secondary battery while taking into account the energy density of the secondary battery.

In an implementation solution of this application, the negative material layer includes a negative active material; a number of particles of the negative active material with a sphericity less than or equal to 0.6 and with a particle diameter less than or equal to 10 μm in the negative active material is N1;,a total number of particles of the negative active material is N, and $N1/N \times 100\% \leq 3\%$. Regulating the value of $N1/N \times 100\%$ within the range of this application is conducive to controlling the stacking morphology of the negative active material in the negative electrode plate, improving infiltration of the electrolyte solution and facilitating uniform contact between the fluoroethylene carbonate and negative material particles, thereby prolonging the cycle life of the secondary battery.

A second aspect of this application provides an electronic device, which includes the secondary battery according to any one of the above implementation solutions. The secondary battery of this application has a long cycle life, and therefore the electronic device of this application has a long service life.

The beneficial effects of this application:

This application provides a secondary battery and an electronic device. The secondary battery includes a positive electrode plate, a negative electrode plate, a separator and an electrolyte solution; the negative electrode plate includes a negative current collector and a negative material layer disposed on at least one surface of the negative current collector, and a single-sided area density of the negative material layer is D g/1540.25 $mm^2$, and $0.100 \leq D \leq 0.180$; the electrolyte solution includes fluoroethylene carbonate, and based on the mass of the electrolyte solution, the mass percentage of the fluoroethylene carbonate is A1%, $4.2 \leq A1 \leq 14.8$; and the secondary battery satisfies: $25 \leq A1/D \leq 100$. Using the fluoroethylene carbonate as a film-forming additive in the electrolyte solution can form a protective layer on the surface of the negative active material to improve the stability of a negative solid electrolyte interface (SEI) film, which reduces the side reaction between the electrolyte solution and the negative active material during the cycle. In this application, by regulating the single-sided area density of the negative material layer and the content of the fluoroethylene carbonate within the above ranges, and enabling the two to satisfy the above proportional relationship, the distribution density of a negative active material, the stacking morphology of the negative active material in the negative electrode plate, and the infiltration trend of the fluoroethylene carbonate in the negative electrode plate can be controlled under synergy, which allows the negative active material at different depths from the surface of the negative electrode plate to come into uniform and sufficient contact with the fluoroethylene carbonate, so that a uniform SEI film with an appropriate thickness is formed on the surface of the negative active material to improve the stability of the negative active material during a cycle of the secondary battery, and reduce the consumption of the electrolyte solution during the cycle, thereby reducing the electrolyte solution retention requirement of the secondary battery, and taking into account the gas production performance during a high-temperature cycle of the secondary battery while improving the normal-temperature cycle performance of the secondary battery. The secondary battery in this application has a long cycle life while having a high energy density and a low electrolyte solution retention capacity.

Of course, implementing any product or method of this application is not necessary to achieve all the above-mentioned advantages simultaneously.

## DETAILED DESCRIPTION OF EMBODIMENTS

The following will clearly and completely describe the technical solutions in embodiments of this application. Obviously, the described embodiments are only part of the embodiments of this application, not all of the embodiments. All other embodiments obtained by a person skilled in the art based on this application fall in the range of protection of this application.

A first aspect of this application provides a secondary battery, the secondary battery includes a positive electrode plate, a negative electrode plate, a separator and an electrolyte solution; the negative electrode plate includes a negative current collector and a negative material layer disposed on at least one surface of the negative current collector; and a single-sided area density of the negative material layer is D g/1540.25 $mm^2$, $0.100 \leq D \leq 0.180$. For example, the value of D may be 0.100, 0.110, 0.120, 0.130, 0.140, 0.150, 0.160, 0.170, 0.180 or a value falling within a range formed by any two of these values. The electrolyte solution includes fluoroethylene carbonate, and based on a mass of the electrolyte solution, a mass percentage of the fluoroethylene carbonate (FEC) is A1%, $4.2 \leq A1 \leq 14.8$. In an implementation solution of this application, $4.2 \leq A1 \leq 8.5$. In another implementation solution of this application, $8.5 \leq A1 \leq 13.5$. For example, A1 may be 4.2, 4.5, 6, 8, 8.5, 9.5, 10, 12, 13.5, 14, 14.8 or a value falling within a range formed by any two of these values. The

secondary battery satisfies: 25 ≤ A1/D ≤ 100. In an implementation solution of this application, 26.7 ≤ A1/D ≤ 66.7. In another implementation solution of this application, 55.6 ≤ A1/D ≤ 76.9. For example, A1/D may be 25, 26.7, 35, 45, 55, 55.6, 65, 66.7, 75, 76.9, 85, 95, 100 or a value falling within a range formed by any two of these values.

In the prior art, a secondary battery with a high energy density requires a high electrolyte solution retention capacity, and the cycle performance thereof can hardly be taken into account under the condition of a low electrolyte solution retention capacity. During a normal-temperature cycle, as the cycle proceeds, the electrolyte solution is involved in a side reaction on the surface of the negative active material and accumulates on the surface of the negative material layer, and lithium ions cannot be properly embedded into the negative material layer, which causes lithium precipitation, thereby easily leading to cycle acceleration and even rapid capacity fading of the secondary battery. When the content of the negative active material in the negative material layer is increased, though the energy density of the secondary battery is increased, the internal resistance and polarization of the secondary battery are also increased, and the side reaction on the surface of the negative material layer is intensified, which further reduces the cycle performance while increasing the consumption of the electrolyte solution. Using the fluoroethylene carbonate as a film-forming additive in the electrolyte solution can form a protective layer on the surface of the negative active material to improve the stability of a negative solid electrolyte interface (SEI) film, which reduces the side reaction between the electrolyte solution and the negative active material during the cycle. When the content of the fluoroethylene carbonate is excessively high, the secondary battery produces a large quantity of gases in a high-temperature (≥45°C) environment, which reduces the gas production performance during the high-temperature intermittent cycle of the secondary battery. In this application, by regulating the weight of the negative material layer and the content of the fluoroethylene carbonate within the range of this application, and enabling the two to satisfy the above proportional relationship, the distribution density of the negative active material, the stacking morphology of the negative active material in the negative electrode plate, and the infiltration trend of the fluoroethylene carbonate in the negative electrode plate can be controlled under synergy, which allows the negative active material at different depths from the surface of the negative electrode plate to come into uniform and sufficient contact with the fluoroethylene carbonate, so that a uniform SEI film with an appropriate thickness is formed on the surface of the negative active material, and the gas production performance during a high-temperature intermittent cycle of the secondary battery is taken into account while the normal-temperature cycle performance of the secondary battery is improved. The secondary battery in this application has a long cycle life while having a high energy density and a low electrolyte solution retention capacity. In this application, the single-sided area density D of the negative material layer can be regulated by means known to a person skilled in the art; for example, when the surface of the negative current collector is coated with a negative slurry, based on the definite solid content of the negative slurry, the coating amount of the negative slurry is increased in order to increase D; and this application has no special restriction as long as the purpose of this application can be achieved.

In an implementation solution of this application, the electrolyte solution further includes ethylene carbonate (EC), propylene carbonate (PC) and propyl propionate (PP); and based on the mass of the electrolyte solution, the sum of mass percentages of ethylene carbonate and propylene carbonate is S1%, and the mass percentage of propyl propionate is S2%, 7 ≤ S1 ≤ 12 and 30 ≤ S2 ≤ 70. Preferably, 32 ≤ S2 ≤ 59. For example, S1 is 7, 8, 9, 10, 11, 12 or a value falling within a range formed by any two of these values; and S2 is 30, 39, 40, 50, 59, 60, 70 or a value falling within a range of formed by any two of these values. By regulating the sum of the mass percentages of ethylene carbonate and propylene carbonate within the range of this application, the electrolyte solution has good ability to dissociate the lithium salt, and a stable SEI film is formed on the surface of the negative electrode plate, thereby prolonging the cycle life of the secondary battery. By regulating the mass percentage of propyl propionate within the range of this application, the electrolyte solution has a low viscosity, which is conducive to diffusion of the electrolyte solution during the cycle, thereby prolonging the cycle life of the secondary battery.

In an implementation solution of this application, based on the mass of the electrolyte solution, a mass percentage of the ethylene carbonate M1 is 2% to 9.5%, and a mass percentage of the propylene carbonate M2 is 2% to 9.5%. For example, the mass percentage of ethylene carbonate M1 is 2%, 3%, 4%, 5%, 6%, 7%, 8%, 9%, 9.5% or a value falling within a range formed by any two of these values; and the mass percentage of propylene carbonate M2 is 2%, 3%, 4%, 5%, 6%, 7%, 8%, 9%, 9.5% or a value falling within a range formed by any two of these values. Regulating the mass percentage of the ethylene carbonate M1 within the range of this application facilitates a synergistic effect of the ethylene carbonate and the fluoroethylene carbonate on the surface of the negative active material at different depths from the surface of the negative electrode plate, so that a highly tough SEI film rich in organic and inorganic composite components is formed to help suppress the consumption of the electrolyte solution during the cycle, thereby prolonging the cycle life of the secondary battery. Regulating the mass percentage of propylene carbonate M2 within the range of this application is conducive to sufficient dissociation of a lithium salt in the electrolyte solution, and is beneficial for the negative active material at different depths from the surface of the negative electrode plate to come into uniform contact with the lithium salt, which further achieves conduction of a lithium ion transmission path, so as to improve the film-forming quality of the fluoroethylene carbonate on the surface of the negative material, thus taking into account the gas production performance during the high-temperature intermittent cycle of the secondary battery while improving the normal-temperature cycle performance of the secondary battery.

In an implementation solution of this application, $15 \leq A1 + S1 \leq 25$. For example, A1 + S1 may be 15, 17, 19, 21, 23, 25 or a value falling within a range formed by any two of these values. Regulating the value of A1 + S1 within the range of this application facilitates a synergistic effect of the ethylene carbonate and the fluoroethylene carbonate, so that a stable SEI film rich in organic and inorganic composites is formed on the surface of the negative electrode plate, and the electrolyte solution has good ability to dissociate the lithium salt, thereby reducing consumption of the electrolyte solution during the cycle and prolonging the cycle life of the secondary battery.

In an implementation solution of this application, $200 \leq S2/D \leq 650$. Preferably, $238 \leq S2/D \leq 580$. For example, S2/D may be 200, 238, 250, 300, 350, 400, 450, 500, 550, 580, 600, 650 or a value falling within a range formed by any two of these values. Regulating the value of S2/D within the range of this application is conducive to controlling the viscosity of the electrolyte solution within an appropriate range, which further achieves conduction of the lithium ion transmission path, so as to improve the film-forming quality of the fluoroethylene carbonate on the surface of the negative active material, thereby prolonging the cycle life of the secondary battery.

In an implementation solution of this application, the electrolyte solution further includes a compound having sulfur-oxygen double-bond, and the compound having sulfur-oxygen double-bond includes at least one selected from the group consisting of 1,3-propane sultone, ethylene sulfate, propylene sultone, 3-fluoro-1,3-propanesultone, 1,2-propane sultone, 1,4-butane sultone, 1,2-butane sultone, 1,3-butane sultone, 2,4-butane sultone and 1,3-pentane sultone. Based on the mass of the electrolyte solution, a mass percentage of the compound having sulfur-oxygen double-bond is S3%, wherein $0.01 \leq S3 \leq 4.9$. Preferably, $3 \leq S3 \leq 4.6$. For example, S3 may be 0.01, 0.1, 0.5, 1, 1.5, 2, 2.5, 3, 3.5, 4, 4.6, 4.9 or a value falling within a range formed by any two of these values. Selecting the compound having sulfur-oxygen double-bond from the above types and regulating the mass percentage of the compound having sulfur-oxygen double-bond within the range of this application are conducive to improving the film-forming quality, thereby prolonging the cycle life of the secondary battery.

In an implementation solution of this application, the electrolyte solution also includes a nitrile compound. The nitrile compound includes at least one selected from the group consisting of malononitrile, succinonitrile, glutaronitrile, adipic dinitrile, pimelonitrile, suberonitrile, 3,3'-oxydipropionitrile, hex-2-enedinitrile, fumaronitrile, 2-pentenedinitrile, methylglutaronitrile, 4-cyanopilmonitrile, (Z)-1,2-dicyanoethylene, 2,2,3,3-tetrafluorosuccinonitrile, ethylene glycol bis(propionitrile) ether, 1,3,6-hexanetricarbonitrile, 1,3,5-pentanetricarbonitrile, heptanedinitrile,4-(2-cyanoethyl)- and 1,2,3-tris(2-cyanoethoxy)propane. Based on the mass of the electrolyte solution, a mass percentage of the nitrile compound is S4%, and $2.6 \leq S4 \leq 8.2$. For example, S4 may be 2.6, 3, 4, 5, 6, 7, 8, 8.2 or a value falling within a range formed by any two of these values. Selecting the nitrile compound from the above types and regulating the mass percentage of the nitrile compound within the range of this application are conducive to improving the stability of an electrode plate structure, thereby prolonging the cycle life of the secondary battery.

In an implementation solution of this application, the electrolyte solution further includes a compound of formula (I):

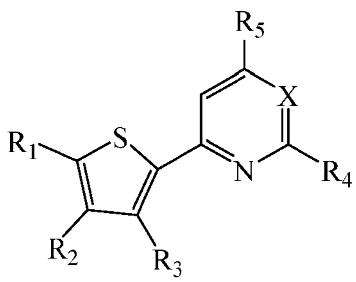

Formula (I)

wherein X is selected from $CR_6$ or N. $R_1$, $R_2$ and $R_3$ are each independently selected from a hydrogen atom, a halogen, a $C_2$ to $C_5$ carbonyl group, a $C_1$ to $C_5$ aldehyde group, an unsubstituted or Ra-substituted $C_1$ to $C_5$ alkyl group, an unsubstituted or Ra-substituted $C_2$ to $C_5$ alkenyl group, an unsubstituted or Ra-substituted $C_2$ to $C_5$ alkynyl group, an unsubstituted or Ra-substituted $C_3$ to $C_5$ N-heterocyclic alkyl group, and a $C_3$ to $C_5$ N-heteroaryl group. $R_4$, $R_5$ and $R_6$ are each independently selected from a hydrogen atom, a $C_1$ to $C_5$ alkyl sulfide group, $C_2$ to $C_5$ thioether, a $C_3$ to $C_5$ N-heterocyclic alkyl group, a $C_3$ to $C_5$ N-heteroaryl group, an unsubstituted or Ra-substituted $C_1$ to $C_5$ alkyl group, an unsubstituted or Ra-substituted $C_2$ to $C_5$ alkenyl group, and an unsubstituted or Ra-substituted $C_2$ to $C_5$ alkynyl group, the $C_1$ to $C_5$ alkyl sulfide group is R-s-, and R is a $C_1$ to $C_5$ alkyl group

A substituent Ra of each group is independently selected from a halogen, a $C_1$ to $C_5$ aldehyde group, a $C_2$ to $C_5$ carbonyl group, a $C_2$ to $C_5$ ester group, a sulfonyl group, an amino group, and a $C_2$ to $C_5$ acylamino group or cyano group.

Based on the total mass of the electrolyte solution, the mass percentage of the compound of formula (I) is S5%, and $0.01 \leq S5 \leq 5$. For example, S5 may be 0.01, 0.1, 0.5, 1, 1.5, 2, 2.5, 3, 3.5, 4, 4.5, 5 or a value falling within a range formed by any two of these values. Selecting the compound of formula (I) from the above types and regulating the mass percentage of the compound of formula (I) within the range of this application facilitate a synergistic effect of the compound of formula (I) and the fluoroethylene carbonate on the surface of the negative active material, so that a stable SEI film with an appropriate thickness and good ion diffusion performance is formed to reduce the consumption of the electrolyte solution during the cycle, thereby prolonging the cycle life of the secondary battery.

In an implementation solution of this application, $R_1$, $R_2$ and $R_3$ are each independently selected from a hydrogen atom, -F, -Cl, -Br, -I, a aldehyde group, a glyoxyl group, an ethyl carbonyl group, a propyl carbonyl group, a methyl group, an ethyl group, a propyl group, a butyl group, a vinyl group, a propenyl group, a butenyl group, an ethynyl group, a propynyl group, a butynyl group, a pyrrolyl group or a pyridinyl group; $R_4$, $R_5$ and $R_6$ are each independently selected from a hydrogen atom, a methylthio group, a dimethyl thioether group, a methyl group, an ethyl group, a propyl group, a butyl group, a vinyl group, a propenyl group, a butenyl group, an ethynyl group, a propynyl group, a butynyl group, a pyrrolyl group or a pyridyl group. Applying the electrolyte solution including the compound of formula (I) having the groups within the above range to the secondary battery facilitates a synergistic effect of the compound of formula (I) and the fluoroethylene carbonate on the surface of the negative active material, so that the film-forming quality is improved to reduce the consumption of the electrolyte solution during the cycle, thereby prolonging the cycle life of the secondary battery.

In an implementation solution of this application, the compound of formula (I) is at least one selected from the following compounds:

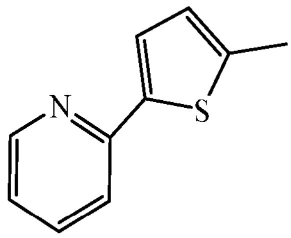
Formula (I-1)

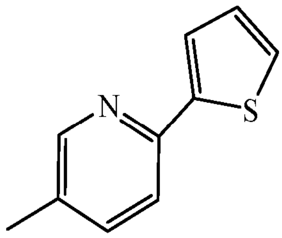
Formula (I-2)

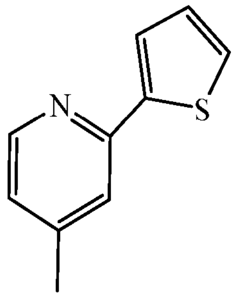
Formula (I-3)

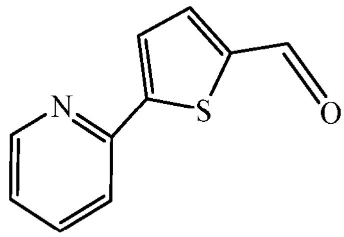
Formula (I-4)

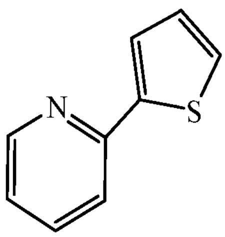
Formula (I-5)

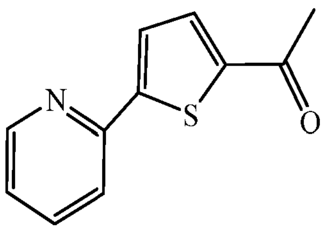
Formula (I-6)

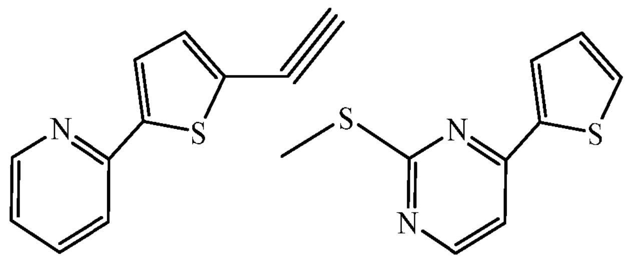
Formula (I-7)

Formula (I-8)

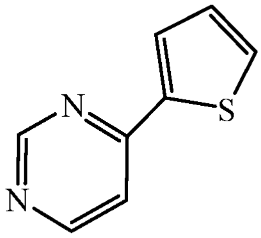
Formula (I-9)

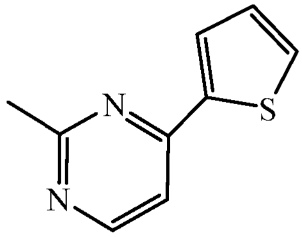
Formula (I-10)

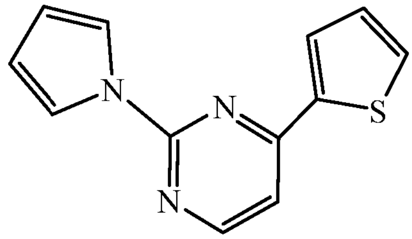
Formula (I-11)

Selecting the compound of formula (I) from the above types is conducive to forming a stable SEI film with an

appropriate thickness and good ion diffusion performance on the surface of the active material to reduce the consumption of the electrolyte solution during the cycle, thereby prolonging the cycle life of the secondary battery.

In an implementation solution of this application, the negative material layer includes a negative active material, and Dv50 of the negative active material is D1 μm, and $5 \leq D1 \leq 25$. Preferably, $8 \leq D1 \leq 15$. For example, D1 may be 5, 8, 12, 15, 19, 20, 25 or a value falling within a range formed by any two of these values. Regulating the Dv50 of the negative active material within the above range is conductive to sufficient contact between the fluoroethylene carbonate and the negative active material, so that a compact SEI film is formed, thereby prolonging the cycle life of the secondary battery. In this application, the Dv50 of the negative active material can be regulated by means known to a person skilled in the art; for example, the negative active material is crushed, graded and shaped; and this application has no special restriction as long as the purpose of this application can be achieved.

In an implementation solution of this application, $0.8 \leq D \times D1 \leq 3.4$. Preferably, $1 \leq D \times D1 \leq 3$. $D \times D1$ is 0.8, 1.0, 1.2, 1.5, 2.0, 2.5, 3.0, 3.2, 3.4 or a value falling within a range formed by any two of these values. By regulating the value of $D \times D1$ within the above range, the distribution density of the negative active material, the stacking morphology of the negative active material in the negative electrode plate, and the infiltration trend of the fluoroethylene carbonate in the negative electrode plate can be further controlled, thereby prolonging the cycle life of the secondary battery while taking into account the energy density of the secondary battery.

In an implementation solution of this application, the negative material layer includes a negative active material; an number of particles of the negative active material with a sphericity less than or equal to 0.6 and with a particle diameter less than or equal to 10 μm in the negative active material is N1; an total number of particles of the negative active material is N, and $N1/N \times 100\% \leq 3\%$. For example, $N1/N \times 100\%$ may be 1%, 1.2%, 1.5%, 2%, 2.3%, 2.5%, 2.7%, 3% or a value falling within a range formed by any two of these values. Regulating the value of $N1/N \times 100\%$ within the range of this application is conducive to controlling the stacking morphology of the negative active material in the negative electrode plate, which improves infiltration of the electrolyte solution and facilitates uniform contact between the fluoroethylene carbonate and negative material particles, thereby prolonging the cycle life of the secondary battery. In this application, the particle sphericity of the negative active material can be regulated by means known to a person skilled in the art; for example, the negative active material is crushed, graded and shaped; and this application has no special restriction as long as the purpose of this application can be achieved. In an implementation solution of this application, the electrolyte solution also includes a lithium salt compound; and the lithium salt compounds includes at least one of lithium hexafluorophosphate, lithium difluorophosphate, lithium tetrafluoroborate, lithium (trifluoromethanesulphonyl)imide, lithium bis(trifluoromethanesulphonyl)imide, lithium bis(oxalate)borate or lithium difluoro(oxalato)borate. Based on the mass of the electrolyte solution, the mass percentage S6 of the lithium salt compound is 10% to 20%. For example, the mass percentage S6 of the lithium salt compound is 10%, 12%, 14%, 16%, 18%, 20% or a value falling within a range formed by any two of these values. Selecting the lithium salt compound from the above types and regulating the mass percentage of the lithium salt compound within the range of this application are conducive to forming a stable SEI film on the surface of the negative electrode plate while providing electrically conductive ions, thereby prolonging the cycle life of the secondary battery.

In an implementation solution of this application, the electrolyte solution includes adipic dinitrile and ethylene glycol bis(propionitrile) ether. In another implementation solution of this application, the electrolyte solution includes ethylene carbonate, propylene carbonate and succinonitrile. In yet another implementation solution of this application, the electrolyte solution includes ethylene sulfate and adipic dinitrile. In still another implementation solution of this application, the electrolyte solution includes ethylene carbonate, propylene carbonate and 1,3,6-hexanetricarbonitrile. Selecting the electrolyte solution that satisfies the above conditions is conducive to prolonging the cycle life of the secondary battery. In an implementation solution of this application, the electrolyte solution in this application also includes a non-aqueous solvent. This application has no special restriction on the non-aqueous solvent as long as the purpose of this application can be achieved. For example, the non-aqueous solvent may include, but is not limited to, at least one of a carbonate compound, an ether compound or other organic solvents. The carbonate compound may include, but is not limited to, at least one of dimethyl carbonate, diethyl carbonate, dipropyl carbonate, methyl propyl carbonate, ethyl propyl carbonate or ethyl methyl carbonate. The ether compound may include, but is not limited to, at least one of dibutyl ether, tetraethylene glycol dimethyl ether, diethylene glycol dimethyl ether, 1,2-dimethoxyethane, 1,2-diethoxyethane, 1-ethoxy-1-methoxyethane, 2-methyltetrahydrofuran or tetrahydrofuran. Other organic solvents may include, but are not limited to, at least one of dimethyl sulfoxide, cyclopentene oxide, sulfolane, methylsulfolane, 1,3-dimethyl-2-imidazolidinone, N-methyl-2-pyrrolidnone, dimethylformamide, acetonitrile, trimethyl phosphate, triethyl phosphate or trioctyl phosphate. This application has no special restriction on the mass percentage S7 of the non-aqueous solvent as long as the purpose of this application can be achieved. Exemplarily, based on the mass of the electrolyte solution, the mass percentage S7 of the non-aqueous solvent is 0% to 85.8%. For example, the mass percentage S7 of the non-aqueous solvent is 0%, 10%, 20%, 30%, 40%, 44%, 45%, 48%, 49%, 50%, 60%, 65%, 70%, 80%, 85% or a value falling within a range formed by any two of these values.

In an implementation solution of this application, the electrolyte solution may include fluoroethylene carbonate, a

lithium salt compound and a non-aqueous solvent; the mass percentages of fluoroethylene carbonate and the lithium salt compound are described above; and the mass percentage S7 of the non-aqueous solvent is 65.2% to 85.8%. The secondary battery including the above electrolyte solution has a long cycle life. In an implementation solution of this application, the electrolyte solution may include fluoroethylene carbonate, ethylene carbonate, propylene carbonate, propyl propionate, a lithium salt compound and a non-aqueous solvent; mass percentages of the fluoroethylene carbonate, the ethylene carbonate, the propylene carbonate, the propyl propionate and the lithium salt compound are described above; and the mass percentage S7 of the non-aqueous solvent is 0% to 48.8%. The secondary battery including the above electrolyte solution has a long cycle life.

In an implementation solution of this application, the electrolyte solution may include fluoroethylene carbonate, ethylene carbonate, propylene carbonate, propyl propionate, a compound having sulfur-oxygen double-bond, a lithium salt compound and a non-aqueous solvent; mass percentages of the fluoroethylene carbonate, the ethylene carbonate, the propylene carbonate, the propyl propionate, the compound having sulfur-oxygen double-bond and the lithium salt compound are described above; and the mass percentage S7 of the non-aqueous solvent is 0% to 48.79%. The secondary battery including the above electrolyte solution has a long cycle life.

In an implementation solution of this application, the electrolyte solution may include fluoroethylene carbonate, ethylene carbonate, propylene carbonate, propyl propionate, a sulfur -oxygen double-bond compound, a nitrile compound, a lithium salt compound and a non-aqueous solvent; mass percentages of the fluoroethylene carbonate, the ethylene carbonate, the propylene carbonate, the propyl propionate, the compound having sulfur-oxygen double-bond and the nitrile compound are described above; and the mass percentage S7 of the non-aqueous solvent is 0% to 46.39%. The secondary battery including the above electrolyte solution has a long cycle life.

In an implementation solution of this application, the electrolyte solution may include fluoroethylene carbonate, ethylene carbonate, propylene carbonate, propyl propionate, a compound having sulfur-oxygen double-bond, a nitrile compound, a compound of formula (I), a lithium salt compound and a non-aqueous solvent; mass percentages of the fluoroethylene carbonate, the ethylene carbonate, the propylene carbonate, the propyl propionate, the compound having sulfur-oxygen double-bond, the nitrile compound, the compound of formula (I) and the lithium salt compound are described above; and the mass percentage S7 of the non-aqueous solvent is 0% to 46.38%. The secondary battery including the above electrolyte solution has a long cycle life.

In an implementation solution of this application, the electrolyte solution may include fluoroethylene carbonate, a compound having sulfur-oxygen double-bond, a lithium salt compound and a non-aqueous solvent; mass percentages of the fluoroethylene carbonate, the compound having sulfur-oxygen double-bond and the lithium salt compound are described above; and the mass percentage S7 of the non-aqueous solvent is 60.3% to 85.79%. The secondary battery including the above electrolyte solution has a long cycle life.

In an implementation solution of this application, the electrolyte solution may include fluoroethylene carbonate, a nitrile compound, a lithium salt compound and a non-aqueous solvent; mass percentages of the fluoroethylene carbonate, the nitrile compound and the lithium salt compound are described above; and the mass percentage S7 of the non-aqueous solvent is 57.2% to 83.4%. The secondary battery including the above electrolyte solution has a long cycle life.

In an implementation solution of this application, the electrolyte solution may include fluoroethylene carbonate, a compound of formula (I), a lithium salt compound and a non-aqueous solvent; mass percentages of the fluoroethylene carbonate, the compound of formula (I) and the lithium salt compound are described above; and the mass percentage S7 of the non-aqueous solvent is 60.2% to 85.79%. The secondary battery including the above electrolyte solution has a long cycle life.

In an implementation solution of this application, the electrolyte solution may include fluoroethylene carbonate, ethylene carbonate, propylene carbonate, propyl propionate, a nitrile compound, a lithium salt compound and a non-aqueous solvent; mass percentages of the fluoroethylene carbonate, the ethylene carbonate, the propylene carbonate, the propyl propionate, the nitrile compound and the lithium salt compound are described above; and the mass percentage S7 of the non-aqueous solvent is 0% to 46.4%. The secondary battery including the above electrolyte solution has a long cycle life.

In an implementation solution of this application, the electrolyte solution may include fluoroethylene carbonate, ethylene carbonate, propylene carbonate, propyl propionate, a compound of formula (I), a lithium salt compound and a non-aqueous solvent; mass percentages of the fluoroethylene carbonate, the ethylene carbonate, the propylene carbonate, the propyl propionate, the compound of formula (I) and the lithium salt compound are described above; and the mass percentage S7 of the non-aqueous solvent is 0% to 48.79%. The secondary battery including the above electrolyte solution has a long cycle life.

In an implementation solution of this application, the electrolyte solution may include fluoroethylene carbonate, a compound having sulfur-oxygen double-bond, a nitrile compound, a lithium salt compound and a non-aqueous solvent; mass percentages of the fluoroethylene carbonate, the compound having sulfur-oxygen double-bond, the nitrile compound and the lithium salt compound are described above; and the mass percentage S7 of the non-aqueous solvent is 52.3% to 83.39%. The secondary battery including the above electrolyte solution has a long cycle life.

In an implementation solution of this application, the electrolyte solution may include fluoroethylene carbonate, a compound having sulfur-oxygen double-bond, a compound of formula (I), a lithium salt compound and a non-aqueous solvent; mass percentages of the fluoroethylene carbonate, the compound having sulfur-oxygen double-bond, the compound of formula (I) and the lithium salt compound are described above; and the mass percentage S7 of the non-aqueous solvent is 55.3% to 85.78%. The secondary battery including the above electrolyte solution has a long cycle life.

In an implementation solution of this application, the electrolyte solution may include fluoroethylene carbonate, a nitrile compound, a compound of formula (I), a lithium salt compound and a non-aqueous solvent; mass percentages of the fluoroethylene carbonate, the nitrile compound, the compound of formula (I) and the lithium salt compound are described above; and the mass percentage S7 of the non-aqueous solvent is 52.2% to 83.39%. The secondary battery including the above electrolyte solution has a long cycle life.

In an implementation solution of this application, the electrolyte solution may include fluoroethylene carbonate, a compound having sulfur-oxygen double-bond, a nitrile compound, a compound of formula (I), a lithium salt compound and a non-aqueous solvent; mass percentages of the fluoroethylene carbonate, the compound having sulfur-oxygen double-bond, the nitrile compound, the compound of formula (I) and the lithium salt compound are described above; and the mass percentage S7 of the non-aqueous solvent is 47.3% to 83.38%. The secondary battery including the above electrolyte solution has a long cycle life.

In this application, "the negative material layer disposed on at least one surface of the negative current collector" means that the negative material layer may be disposed on one surface of the negative current collector in the thickness direction thereof, and may also be disposed on two surfaces of the negative current collector in the thickness direction thereof. It should be noted that the "surface" here may be the whole area of the surface of the negative current collector, and may also be part of the area of the surface of the negative current collector, and this application has no special restriction as long as the purpose of this application can be achieved. This application has no special restriction on the negative current collector as long as the purpose of this application can be achieved. For example, the negative current collector may include copper foil, copper alloy foil, nickel foil, stainless steel foil, titanium foil, nickel foam, copper foam or a composite current collector (such as a lithium-copper composite current collector, a carbon-copper composite current collector, a nickel-copper composite current collector or a titanium-copper composite current collector), etc. This application has no special restriction on types of the negative active material as long as the purpose of this application can be achieved. For example, the negative active material may include at least one of natural graphite, artificial graphite, mesocarbon microbeads (MCMBs), hard carbon, soft carbon, silicon, a silicon-carbon complex, $SiO_x$ ($0 < x < 2$), Li-Sn alloy, Li-Sn-O alloy, Sn, SnO, $SnO_2$, lithium titanate $Li_4Ti_5O_{12}$ of a spinel structure, Li-Al alloy or lithium metal. This application has no special restriction on the thicknesses of the negative current collector and the negative material layer as long as the purpose of this application can be achieved. For example, the thickness of the negative current collector is 4 μm to 20 μm, and the thickness of the negative material layer is 30 μm to 130 μm. Optionally, the negative material layer may further include a conductive agent and a negative binder. This application has no special restriction on types of the conductive agent in the negative material layer as long as the purpose of this application can be achieved. For example, the conductive agent may include, but is not limited to, at least one of conductive carbon black (Super P), carbon nanotubes (CNTs), a carbon fiber, flake graphite, ketjen black, graphene, a metallic material or a conducting polymer. The above carbon nanotubes may include, but is not limited to, single-walled carbon nanotubes and/or multi-walled carbon nanotubes. The above carbon fiber may include, but is not limited to, a vapor grown carbon fiber (VGCF) and/or a carbon nanofiber. The above metallic material may include, but is not limited to, metal powder and/or metal fibers, and specifically, metal may include, but is not limited to at least one of copper, nickel, aluminum or silver. The conducting polymer may include, but is not limited to, at least one of a polyphenylene derivative, polyaniline, polythiophene, polyacetylene or polypyrrole. This application has no special restriction on types of the negative binder as long as the purpose of this application can be achieved. For example, the negative binder may include, but is not limited to, at least one of polyvinylidene fluoride, vinylidene fluoride-hexafluoropropylene copolymer, polyamide, polyacrylonitrile, polyacrylate, a polyacrylic acid, polyacrylate, polyvinylpyrrolidone, polyvinylether, polymethylmethacrylate, polytetrafluoroethylene or polyhexafluoropropylene. This application has no special restriction on a mass ratio of the negative active material, the conductive agent to the negative binder in the negative material layer as long as the purpose of this application can be achieved.

This application has no special restriction on the positive electrode plate as long as the purpose of this application can be achieved. For example, the positive electrode plate includes a positive current collector and a positive material layer disposed on at least one surface of the positive current collector. The above-mentioned "positive material layer disposed on at least one surface of the positive current collector" means that the positive material layer may be disposed on one surface of the positive current collector in the thickness direction thereof, and may also be disposed on two surfaces of the positive current collector in the thickness direction thereof. It should be noted that the "surface" here may be the whole area of the surface of the positive current collector, and may also be part of the area of the surface of the positive current collector, and this application has no special restriction as long as the purpose of this application can be achieved. This application has no special restriction on the positive current collector as long as the purpose of this application can be achieved. For example, the positive current collector may include aluminum foil, aluminum alloy foil or a composite current

collector (such as an aluminum-carbon composite current collector), etc. The positive material layer of this application includes a positive active material. This application has no special restriction on types of the positive active material as long as the purpose of this application can be achieved. For example, the positive active material may include lithium nickel cobalt manganese oxide (NCM811, NCM622, NCM523 and NCM111), lithium nickel cobalt aluminum oxide, lithium iron phosphate, a lithium-rich manganese-based material, lithium cobalt oxide ($LiCoO_2$), lithium manganate, lithium manganese iron phosphate, lithium titanate or the like. In this application, the positive active material may further include non-metallic elements. For example, the non-metallic elements include at least one of fluorine, phosphorus, boron, chlorine, silicon or sulfur. This application has no special restriction on the thicknesses of the positive current collector and the positive material layer as long as the purpose of this application can be achieved. For example, the thickness of the positive current collector is 5 μm to 20 μm, and is preferably 6 μm to 18 μm. The thickness of a single-sided positive material layer is 30 μm to 120 μm. In this application, the positive material layer may further include a conductive agent and a positive binder. This application has no special restriction on types of the conductive agent in the positive material layer as long as the purpose of this application can be achieved. For example, the conductive agent may be of the same type as that in the above negative material layer. This application has no special restriction on types of the positive binder in the positive material layer as long as the purpose of this application can be achieved. For example, the positive binder may be of the same type as that in the above positive material layer. This application has no special restriction on a mass ratio of the positive active material, the positive binder to the positive binder in the positive material layer, which can be selected by a person skilled in the art according to actual requirements, as long as the purpose of this application can be achieved.

This application has no special restriction on the separator as long as the purpose of this application can be achieved. For example, the material of the separator may include, but is not limited to, at least one of polyolefin (PO) dominated by polyethylene (PE) and polypropylene (PP), polyester (such as polyethylene terephthalate (PET) films), cellulose, polyimide (PI), polyamide (PA), spandex or aramid. The type of the separator may include at least one of a woven film, a non-woven film, a microporous film, a composite film, a rolled film or a spun film. The separator of this application may have a porous structure. This application has no special restriction on the aperture size of the porous structure of the separator as long as the purpose of this application can be achieved. For example, the aperture size may be 0.01 μm to 1 μm. This application has no special restriction on the thickness of the separator as long as the purpose of this application can be achieved. For example, the thickness of the separator may be 4 μm to 500 μm.

The secondary battery of this application may further include a packaging bag for accommodating the positive electrode plate, the negative electrode plate, the separator and the electrolyte solution, as well as other components well known in the art in the secondary battery. This application has no restriction on the above other components. This application has no special restriction on the packaging bag, which may be a packaging bag known in the art, as long as the purpose of this application can be achieved.

This application has no special restriction on types of the secondary battery, which may include any device that generates an electrochemical reaction. For example, the secondary battery may include, but is not limited to: a lithium metal secondary battery, a lithium-ion secondary battery (a lithium-ion battery), a sodium-ion secondary battery (a sodium-ion battery), a lithium polymer secondary battery and a lithium-ion polymer secondary battery.

This application has no special restriction on a preparation method for the secondary battery, which may be selected from preparation methods known in the art, as long as the purpose of this application can be achieved. For example, the preparation method for the secondary battery includes, but is not limited to, the following steps: stacking a positive electrode plate, a separator and a negative electrode plate in sequence, performing winding, folding and other operations on same according to requirements to obtain an electrode assembly of a winding structure, placing the electrode assembly in a packaging bag, injecting an electrolyte solution into the packaging bag and sealing the packaging bag to obtain the secondary battery; or stacking a positive electrode plate, a separator and a negative electrode plate in sequence, then properly fixing four corners of the whole laminated structure to obtain an electrode assembly of a laminated structure, placing the electrode assembly into a packaging bag, injecting an electrolyte solution into the packaging bag and sealing the bag to obtain the secondary battery.

A second aspect of this application provides an electronic device, which includes the secondary battery according to any one of the above embodiments. The secondary battery of this application has a long cycle life, and therefore the electronic device of this application has a long service life.

There is no special restriction on the electronic device of this application, which may any electronic device known in the art. For example, the electronic device may include, but is not limited to, a notebook computer, pen-inputting computer, mobile computer, e-book player, portable phone, portable fax machine, portable photocopier, portable printer, head-mounted stereo headset, video recorder, liquid crystal display television set, handheld cleaner, portable CD player, mini CD-ROM, transceiver, electronic notepad, calculator, memory card, portable voice recorder, radio, backup power supply, electric motor, automobile, motorcycle, power-assisted bicycle, bicycle, lighting appliance, toy, game console, watch, electric tool, flashlight, camera, large household storage battery and lithium-ion capacitor.

## Embodiment

Implementations of this application are described in more details below with reference to embodiments and comparative embodiments. Various tests and evaluations are performed according to the following methods.

### Test method and apparatus:

### Negative active material Dv50 test:

Scraping off a negative material layer from a negative current collector in each embodiment or comparative embodiment, and performing thermal treatment on the obtained negative material layer in a tube furnace at 400 °C for 4 h under argon protection to obtain a powder. Putting 0.02 g of the resulting powder in a 50 mL clean beaker, adding 20 mL of deionized water, and then dropwise adding 0.2 mL of sodium dodecyl sulfate as a surfactant to completely disperse the powder in the deionized water, performing ultrasonic treatment for 5 min in a 120W ultrasonic cleaning machine, measuring the particle diameter distribution by using MasterSizer 2000, and conducting a test by means of a laser scattering particle size analyzer to obtain: the corresponding diameter when the cumulative volume fraction of particles in volume-based distribution reaches 50%.

### Negative active material sphericity test:

Using a scanning electron microscope for magnification until the number of particles of the negative active material observed is n ($n \geq 100$), randomly taking 100 particles from n particles of the negative active material, and respectively measuring the above 100 particles of the negative active material by using a particle image workstation to obtain the minimum diameter r and the maximum diameter R of particles of the negative active material, the sphericity calculation formula: $e = r/R$, and the particle diameter of the negative active material = $(r + R)/2$, the number of particles of the negative active material with a sphericity less than or equal to 0.6 and an average diameter less than or equal to 10 μm is N1, and the total number of particles of the negative active material is N; and calculating the value of N1/N in each embodiment or comparative embodiment.

### Normal-temperature cycle performance test:

At 25°C, charging a lithium-ion battery to 4.25 V at a constant current of 1.2 C and to a current of 0.7 C at a constant voltage of 4.25 V, then charging to 4.5 V at a constant current of 0.7 C and to a current of 0.05 C at a constant voltage of 4.5 V, and after standing for 5 min, discharging to 3.0 V at a constant current of 0.5 C, this is the first cycle, and recording the discharge capacity. Performing several cycles according to the above cycle process, and measuring the discharge capacity of the lithium-ion battery after each cycle. Taking the first discharge capacity of 100%, performing charge-discharge cycles repeatedly, until the discharge capacity retention ratio fades to 80% of the first discharge capacity, stopping the test, and recording the number of cycles as an indicator for evaluating the capacity retention ratio during a normal-temperature cycle of the lithium-ion battery.

Capacity retention ratio = (Discharge capacity after each cycle/discharge capacity of first cycle) × 100%.

### Gas production test during high-temperature intermittent cycle (ITC):

At 45°C, charging a lithium-ion battery to 4.5 V at a constant current of 0.5 C and to 0.05 C at a constant voltage of 4.5 V, measuring a thickness of a battery cell by a ten-thousandth micrometer, this thickness is an initial thickness; after standing for 19.5 at 45°C, discharging to 3.0 V at a constant current of 0.5 C. Performing several cycles according to the above cycle process, and measuring the thickness of the lithium-ion battery charged at a constant voltage. Calculating the thickness swelling rate according to the following formula, until the thickness swelling rate reaches 10%, stopping the test, recording the number of cycles, namely the number of high-temperature intermittent cycles, as an indicator for evaluating the gas production during a high-temperature intermittent cycle of the lithium-ion battery.

Thickness swelling rate = (thickness after charging of each cycle at constant voltage - initial thickness)/initial thickness × 100%.

The larger the number of the high-temperature intermittent cycles, the better the gas production performance during a high-temperature intermittent cycle of the lithium-ion battery, and the less the gas production amount of the

lithium-ion battery. The smaller the number of the high-temperature intermittent cycles, the poorer the gas production performance during a high-temperature intermittent cycle of the lithium-ion battery, and the greater the gas production amount of the lithium-ion battery.

**Embodiment 1-1**

<Preparing an electrolyte solution>

In an argon atmosphere glove box with a water content less than 10 ppm, mixing fluoroethylene carbonate (FEC) and non-aqueous solvent diethyl carbonate (DEC) to obtain a basic solvent, then adding a lithium salt compound $LiPF_6$ to the above basic solvent, and uniformly stirring the mixture to obtain an electrolyte solution, where, based on a mass of the electrolyte solution, a mass percentage of $LiPF_6$ is 12%, and a mass percentage $A_1$ of FEC is 10%.

<Preparing a negative electrode plate>

Mixing graphite as a negative active material, styrene-butadiene rubber as a negative binder, and sodium carboxymethylcellulose as a negative thickening agent according to a mass ratio of 95: 2: 3, adding deionized water, and uniformly stirring under the action of a vacuum mixer, to obtain a negative slurry with a solid content of 75 wt%. Uniformly coating one surface of a negative current collector copper foil with a thickness of 5 μm with the negative slurry, and drying at 85 °C for 4 hours, to obtain a negative electrode plate with a single face coated with the negative active material and a width of 76.6 mm. Repeating the above steps on the other surface of the negative current collector copper foil, so as to obtain the negative electrode plate with double faces coated with the negative active material. Then, drying at 85 °C under vacuum conditions for 4 hours, and performing cold pressing, slicing and slitting to obtain the negative electrode plate with a specification of 76.6 mm × 875 mm, a single-sided area density D of the negative material layer is 0.150 g/1540.25 $mm^2$. Grinding, grading and shaping the negative active material to obtain the negative active material with Dv50, namely D1 of 15 μm.

<Preparing a positive electrode plate>

Mixing $LiCoO_2$ as a positive active material, conductive carbon black as a conductive agent and polyvinylidene fluoride (PVDF) as a positive binder according to a mass ratio of 95: 2: 3, adding N-methyl pyrrolidone (NMP), and uniformly stirring under the action of the vacuum mixer, to obtain a positive slurry with a solid content of 70 wt%. Uniformly coating one surface of a positive current collector copper foil with a thickness of 9 μm with the positive slurry, and drying at 85 °C for 4 hours, to obtain a positive electrode plate with a single face coated with the positive material layer, the thickness of the coating is 110 μm and the width of the coating is 74 mm. Repeating the above steps on the other surface of the positive current collector copper foil, so as to obtain the positive electrode plate with double faces coated with the positive material layer. Then, drying at 85 °C under vacuum conditions for 4 hours, and performing cold pressing, slicing and slitting to obtain the positive electrode plate with a specification of 74 mm × 867 mm.

<Preparing a separator>

Mixing PVDF and alumina ceramic according to a mass ratio of 1: 2, adding NMP as a solvent, blending the mixture into a ceramic layer slurry with a solid content of 12 wt%, uniformly stirring, uniformly coating one surface of a polyethylene substrate with a thickness of 5 μm with the ceramic layer slurry, and drying to obtain a separator with a single face coated with an alumina ceramic layer having a thickness of 2 μm. Adding PVDF to an NMP solvent, uniformly stirring, blending the mixture into a PVDF slurry with a solid content of 25 wt%, then coating one surface of the alumina ceramic layer with 0.15 $mg/cm^2$ of PVDF, drying at 85 °C for 4 hours, finally coating the other surface of the polyethylene substrate with 0.15 $mg/cm^2$ of PVDF, and drying at 85 °C for 4 hours to obtain the separator.

<Preparing a lithium-ion battery>

Properly and sequentially stacking the positive electrode plate, the separator and the negative electrode plate prepared above, such that the face coated with the alumina ceramic layer and the PVDF in the separator faces the positive electrode plate, the face coated with only the PVDF faces the negative electrode plate, and the separator is located between the negative electrode plate and the negative electrode plate to play a role in isolation, and then performing winding to obtain an electrode assembly. After welding tabs, placing the electrode assembly into an aluminum plastic film packaging bag, placing the bag in a vacuum oven at 85 °C, drying for 12 hours to remove moisture, injecting the above prepared electrolyte solution, and performing such procedures as vacuum packaging, standing, formation and shaping to

obtain the lithium-ion battery.

**Embodiment 1-2 to Embodiment 1-10**

Identical to Embodiment 1-1 except that the relevant preparation parameters are adjusted according to Table 1, as the mass percentage of fluoroethylene carbonate A1 changes, the mass percentage of a non-aqueous solvent also changes, and the mass percentage of a lithium salt compound is unchanged. When D changes, the coating amount of a negative slurry is regulated, such that the single-sided area density D of the negative material layer is as shown in Table 1.

**Embodiment 2-1 to Embodiment 2-14**

Embodiment 2-1 to Embodiment 2-13 are identical to Embodiment 1-1 except that ethylene carbonate, propylene carbonate and propyl propionate are added in <Preparing an electrolyte solution> and the relevant preparation parameters are adjusted according to Table 2. Embodiment 2-14 is identical to Embodiment 1-7 except that ethylene carbonate, propylene carbonate and propyl propionate are added in <Preparing an electrolyte solution> and the relevant preparation parameters are adjusted according to Table 2, whereinas at least one of the mass percentage of the ethylene carbonate M1, the mass percentage of the propylene carbonate M2 , the sum of the mass percentages of the ethylene carbonate S1 and the propylene carbonate or the mass percentage of the propyl propionate S2 changes, the mass percentage of a non-aqueous solvent also changes, and the mass percentage of a lithium salt compound is unchanged.

**Embodiment 3-1 to Embodiment 3-19**

Identical to Embodiment 1-1 except that one of a compound having sulfur-oxygen double-bond, a nitrile compound or a compound of formula (I) is added in <Preparing an electrolyte solution> and the relevant preparation parameters are adjusted according to Table 3, whereas the mass percentage of compound having sulfur-oxygen double-bond S3 changes, the mass percentage of the nitrile compound S4 or the mass percentage of the compound of formula (I) S5 change, the mass percentage of a non-aqueous solvent also changes, and the mass percentage of a lithium salt compound is unchanged.

**Embodiment 4-1 to Embodiment 4-10**

Identical to Embodiment 1-1 except that at least two of ethylene carbonate, propylene carbonate and propyl propionate, a compound having sulfur-oxygen double-bond, a nitrile compound or a compound of formula (I) are added in <Preparing an electrolyte solution> and the relevant preparation parameters are adjusted according to Table 4, whereas at least one of the mass percentage of the ethylene carbonate M1, the mass percentage of the propylene carbonate M2 , the sum of the mass percentages of the ethylene carbonate and the propylene carbonate S1, the mass percentage of the propyl propionate S2, the mass percentage of compound having sulfur-oxygen double-bond S3, the mass percentage of the nitrile compound S4 or the mass percentage of the compound of formula (I) S5 changes, the mass percentage of a non-aqueous solvent also changes, and the mass percentage of a lithium salt compound is unchanged.

**Embodiment 5-1 to Embodiment 5-10**

Identical to Embodiment 1-1 except that the relevant preparation parameters are adjusted according to Table 5, when D1 and N1 change, crushing and shaping time is adjusted, such that the values of D1 and N1 are as shown in Table 5.

**Comparative Embodiment 1 to Comparative Embodiment 5**

Identical to Embodiment 1-1 except that the relevant preparation parameters are adjusted according to Table 1, whereas the mass percentage of fluoroethylene carbonate A1 changes, the mass percentage of a non-aqueous solvent also changes, and the mass percentage of a lithium salt compound is unchanged.

Comparative Embodiment 6

Identical to Embodiment 1-1 except that an electrolyte solution is prepared according the following steps of <Preparing an electrolyte solutions

<Preparation of an electrolyte solution>

In an argon atmosphere glove box with a water content less than 10 ppm, mixing ethylene carbonate and propylene carbonate with diethyl carbonate (DEC) according to a mass ratio of 1: 1 to obtain a basic solvent, then adding a lithium salt $LiPF_6$ to the above basic solvent, and uniformly stirring to obtain an electrolyte solution, based on the mass of the electrolyte solution, the mass percentage of the $LiPF_6$ is 12%, the mass percentage of the ethylene carbonate is 5%, and the mass percentage of the diethyl carbonate is 78%.

The preparation parameters and performance parameters of the embodiments and the comparative embodiments are shown in Table 1 to Table 5.

Table 1

| | Al(%) | D (g/1540.25 $mm^2$) | A1/D | Number of normal-temperature cycles (cycles) | Number of high-temperature intermittent cycles (cycles) |
|---|---|---|---|---|---|
| Embodiment 1-1 | 10 | 0.150 | 66.7 | 217 | 53 |
| Embodiment 1-2 | 4.2 | 0.150 | 28 | 225 | 57 |
| Embodiment 1-3 | 4.5 | 0.150 | 30 | 229 | 57 |
| Embodiment 1-4 | 8.5 | 0.150 | 56.7 | 231 | 59 |
| Embodiment 1-5 | 13.5 | 0.180 | 75 | 221 | 55 |
| Embodiment 1-6 | 14.8 | 0.150 | 98.7 | 210 | 49 |
| Embodiment 1-7 | 10 | 0.100 | 100 | 207 | 48 |
| Embodiment 1-8 | 10 | 0.130 | 76.9 | 215 | 51 |
| Embodiment 1-9 | 10 | 0.180 | 55.6 | 213 | 50 |
| Embodiment 1-10 | 4.2 | 0.160 | 26.3 | 208 | 48 |
| Comparative Embodiment 1 | 2 | 0.150 | 13.3 | 112 | 30 |
| Comparative Embodiment 2 | 18 | 0.150 | 120 | 114 | 25 |
| Comparative Embodiment 3 | 10 | 0.080 | 125 | 129 | 38 |
| Comparative Embodiment 4 | 10 | 0.200 | 50 | 117 | 28 |
| Comparative Embodiment 5 | 4 | 0.180 | 22.2 | 121 | 35 |
| Comparative Embodiment 6 | / | 0.150 | / | 98 | 20 |
| Note: "/" in Table 1 represents no corresponding parameter or substance. | | | | | |

It can be seen from Embodiment 1-1 to Embodiment 1-10, and Comparative embodiment 1 to Comparative embodiment 6 that in this application, by regulating the single-sided area density of the negative material layer and the content of fluoroethylene carbonate within the range of this application, and enabling the two to satisfy the proportional relationship of this application, the lithium-ion battery has a great number of high-temperature intermittent cycles and a great number of normal-temperature cycles, which indicates good cycle performance of the lithium-ion battery. The content of the fluoroethylene carbonate in Comparative embodiment 1 to Comparative embodiment 2 is not within the range of this application, the single-sided area density of the negative material layer in Comparative embodiment 3 to Comparative embodiment 4 is not within the range of this application, and the ratio of the content of the fluoroethylene carbonate to the single-sided area density of the negative material layer in Comparative embodiment 5 is not within the range of this application; the electrolyte solution in Comparative embodiment 6 excludes the fluoroethylene carbonate; compared with Embodiment 1-1 to Embodiment 1-10, the lithium-ion battery in the embodiments of this application has a great number of high-temperature intermittent cycles and a great number of normal-temperature cycles, which indicates good cycle performance of the lithium-ion battery.

Table 2

| | M1(%) | M2(%) | S1(%) | S2(%) | S2/D | Number of normal-temperature cycles (cycles) | Number of high-temperature intermittent cycles (cycles) |
|---|---|---|---|---|---|---|---|
| Embodiment 1-1 | / | / | / | / | / | 217 | 53 |
| Embodiment 2-1 | 3 | 4 | 7 | 50 | 333.3 | 356 | 52 |
| Embodiment 2-2 | 5 | 5 | 10 | 50 | 333.3 | 375 | 50 |
| Embodiment 2-3 | 6 | 6 | 12 | 50 | 333.3 | 389 | 48 |
| Embodiment 2-4 | 2 | 3 | 5 | 50 | 333.3 | 305 | 53 |
| Embodiment 2-5 | 7 | 7 | 14 | 50 | 333.3 | 312 | 45 |
| Embodiment 2-6 | 2 | 9.5 | 11.5 | 50 | 333.3 | 355 | 52 |
| Embodiment 2-7 | 9.5 | 2 | 11.5 | 50 | 333.3 | 405 | 42 |
| Embodiment 2-8 | 5 | 5 | 10 | 32 | 200 | 364 | 51 |
| Embodiment 2-9 | 6 | 6 | 12 | 39 | 260 | 374 | 53 |
| Embodiment 2-10 | 4 | 4 | 8 | 59 | 393.3 | 373 | 55 |
| Embodiments 2-11 | 4 | 4 | 8 | 70 | 466.7 | 370 | 52 |
| Embodiment 2-12 | 5 | 5 | 10 | 20 | 133.3 | 330 | 49 |
| Embodiment 2-13 | 1 | 1 | 2 | 76 | 506.7 | 248 | 53 |
| Embodiment 1-7 | / | / | / | / | / | 207 | 48 |
| Embodiment 2-14 | 3 | 3 | 6 | 65 | 650 | 257 | 49 |
| Note: "/" in Table 2 represents no corresponding parameter or substance. | | | | | | | |

Table 3

| | Sulfer-oxygen double-bond compound | S3(%) | Nitrile compound | S4(%) | Compound of Formula I | S5(%) | Number of normal-temperature cycles (cycles) | Number of high-temperature intermittent cycles (cycles) |
|---|---|---|---|---|---|---|---|---|
| Embodiment 1-1 | / | / | / | / | / | / | 217 | 53 |
| Embodiment 3-1 | Ethylene sulfate | 0.1 | / | / | / | / | 257 | 58 |
| Embodiment 3-2 | Ethylene sulfate | 3 | / | / | / | / | 325 | 70 |
| Embodiment 3-3 | Ethylene sulfate | 4.9 | / | / | / | / | 317 | 75 |
| Embodiment 3-4 | Ethylene sulfate | 7 | / | / | / | / | 238 | 78 |
| Embodiment 3-5 | Prop-1-ene-1,3-sultone | 3 | / | / | / | / | 316 | 63 |
| Embodiment 3-6 | / | / | Succinonitrile | 3 | / | / | 298 | 75 |
| Embodiment 3-7 | | | Adipic dinitrile | 2.6 | | | 288 | 72 |
| Embodiment 3-8 | / | / | Adiponitrile + ethylene glycol bis(propionitrile) ether | 2+3 | / | / | 309 | 80 |
| Embodiment 3-9 | / | / | Succinonitrile | 8 | / | / | 287 | 78 |
| Embodiment 3-10 | / | / | Succinonitrile | 1 | / | / | 264 | 60 |
| Embodiment 3-11 | / | / | Succinonitrile | 10 | / | / | 244 | 58 |
| Embodiment 3-12 | / | / | 2-pentenedinitrile | 5 | / | / | 305 | 75 |
| Embodiment 3-13 | / | / | 1,3,5-pentanetricarbonitrile | 2.6 | / | / | 279 | 71 |

(continued)

| | Sulfer-oxygen double-bond compound | S3(%) | Nitrile compound | S4(%) | Compound of Formula I | S5(%) | Number of normal-temperature cycles (cycles) | Number of high-temperature intermittent cycles (cycles) |
|---|---|---|---|---|---|---|---|---|
| Embodiment 3-14 | / | / | heptanedinitrile,4-(2-cyanoe thyl)- | 3 | / | / | 281 | 73 |
| Embodiment 3-15 | / | / | / | / | Formula (I-1) | 0.01 | 235 | 59 |
| Embodiment 3-16 | / | / | / | / | Formula (I-1) | 3 | 289 | 70 |
| Embodiment 3-17 | / | / | / | / | Formula (I-1) | 5 | 276 | 73 |
| Embodiment 3-18 | / | / | / | / | Formula (I-1) | 7 | 228 | 57 |
| Embodiment 3-19 | / | / | / | / | Formula (I-4) | 3 | 285 | 67 |

Note: "j" in Table 3 represents no corresponding parameter or substance. The nitrile compound in Embodiment 3-8 is adipic dinitrile + ethylene glycol bis(propionitrile) ether, which means that the nitrile compound is adipic dinitrile and ethylene glycol bis(propionitrile)ether; S4 being 2 + 3 means that based on the mass of the electrolyte solution, the mass percentage of the adipic dinitrile is 2%, and the mass percentage of the ethylene glycol bis(propionitrile)ether is 3%, then the mass percentage of the nitrile compound is 5%, and other embodiments are understood by analogy.

Table 4

| | M1 (%) | M2 (%) | S1 (%) | S2 (%) | S2/D | sulfur -oxygen double-bond compound | S3 (%) | Nitrile compound | S4 (%) | Compound of Formula I | S5 (%) | Number of normal-temperature cycles (cycles) | Number of high-temperature intermittent cycles (cycles) |
|---|---|---|---|---|---|---|---|---|---|---|---|---|---|
| Embodiment 4-1 | 5 | 5 | 10 | 50 | 333.3 | Ethylene sulfate | 3 | / | / | / | / | 512 | 68 |
| Embodiment 4-2 | 5 | 5 | 10 | 50 | 333.3 | / | / | Succinonitrile + 1,3,6-hexane tricarbonitrile | 2+3 | / | / | 505 | 85 |
| Embodiment 4-3 | 5 | 5 | 10 | 50 | 333.3 | / | / | / | / | Formula (I-1) | 3 | 501 | 82 |
| Embodiment 4-4 | / | / | / | / | / | Ethylene sulfate | 3 | Succinonitrile | 5 | / | / | 455 | 90 |
| Embodiment 4-5 | / | / | / | / | / | Ethylene sulfate | 3 | / | / | Formula (I-1) | 3 | 445 | 88 |
| Embodiment 4-6 | / | / | / | / | / | / | / | Succinonitrile | 5 | Formula (I-1) | 3 | 440 | 93 |
| Embodiment 4-7 | 5 | 5 | 10 | 50 | 333.3 | Ethylene sulfate | 3 | Adiponitrile + ethylene glycol bis(propionitrile) ether | 2+3 | / | / | 556 | 87 |
| Embodiment 4-8 | 5 | 5 | 10 | 50 | 333.3 | Ethylene sulfate | 3 | / | / | Formula (I-1) | 3 | 535 | 85 |
| Embodiment 4-9 | / | / | / | / | / | Ethylene sulfate | 3 | Succinonitrile | 5 | Formula (I-1) | 3 | 470 | 95 |
| Embodiment 4-10 | 5 | 5 | 10 | 50 | 333.3 | Ethylene sulfate | 3 | Succinonitrile | 5 | Formula (I-1) | 3 | 585 | 90 |

Note: "/" in Table 4 represents no corresponding parameter or substance.

The mass percentages of ethylene carbonate, propylene carbonate and propyl propionate usually affect the cycle performance of the lithium-ion battery. It can be seen from Embodiment 1-1 and Embodiment 2-1 to Embodiment 2-14 that the mass percentages of the ethylene carbonate, propylene carbonate and propyl propionate are within the range of this application; compared with Embodiment 1-1, the number of the high-temperature intermittent cycles of the lithium-ion battery slightly decreases, and the number of the normal-temperature cycles obviously increases, which indicates that regulating the mass percentages of ethylene carbonate and propylene carbonate within the range of this application is conducive to taking into account the gas production performance during a high-temperature intermittent cycle of the secondary battery while improving the normal-temperature cycle performance of the secondary battery, which indicates good cycle performance of the lithium-ion battery.

The type and mass percentage of the compound having sulfur-oxygen double-bond usually affect the cycle performance of the lithium-ion battery. It can be seen from Embodiment 1-1 and Embodiment 3-1 to Embodiment 3-5 that when the type and mass percentages of the compound having sulfur-oxygen double-bond are within the range of this application, the lithium-ion battery has a great number of high-temperature intermittent cycles and a great number of normal-temperature cycles, which indicates good cycle performance of the lithium-ion battery.

The type and mass percentage of the nitrile compound usually affect the cycle performance of the lithium-ion battery. It can be seen from Embodiment 1-1 and Embodiment 3-6 to Embodiment 3-14 that when the type and mass percentage of the nitrile compound are within the range of this application, the lithium-ion battery has a great number of high-temperature intermittent cycles and a great number of normal-temperature cycles, which indicates good cycle performance of the lithium-ion battery.

The type and mass percentage of the compound of formula (I) usually affect the cycle performance of the lithium-ion battery. It can be seen from Embodiment 1-1 and Embodiment 3-15 to Embodiment 3-19 that when the type and mass percentages of the compound of formula (I) are within the range of this application, the lithium-ion battery has a great number of high-temperature intermittent cycles and a great number of normal-temperature cycles, which indicates good cycle performance of the lithium-ion battery.

Different types of electrolyte solutions usually affect the cycle performance of the lithium-ion battery. It can be seen from Embodiment 4-1 to Embodiment 4-10 that when the electrolyte solution of a combination within the range of this application is selected, the lithium-ion battery has a great number of high-temperature intermittent cycles and a great number of normal-temperature cycles, which indicates good cycle performance of the lithium-ion battery.

Table 5

| | D1(μm) | D×-D1 | N1 | N1/N(%) | Number of normal-temperature cycles (cycles) | Number of high-temperature intermittent cycles (cycles) |
|---|---|---|---|---|---|---|
| Embodiment 1-1 | 15 | 2.25 | 2 | 2 | 217 | 53 |
| Embodiment 5-1 | 5 | 0.75 | 2 | 2 | 195 | 50 |
| Embodiment 5-2 | 25 | 3.75 | 2 | 2 | 187 | 48 |
| Embodiment 5-3 | 8 | 1.2 | 2 | 2 | 210 | 52 |
| Embodiment 5-4 | 3 | 0.45 | 2 | 2 | 146 | 43 |
| Embodiment 5-5 | 27 | 4.05 | 2 | 2 | 155 | 45 |
| Embodiment 5-6 | 15 | 2.25 | 1 | 1 | 227 | 58 |
| Embodiment 5-7 | 15 | 2.25 | 3 | 3 | 202 | 49 |
| Embodiment 5-8 | 15 | 2.25 | 4 | 4 | 165 | 40 |
| Embodiment 5-9 | 10 | 1 | 2 | 2 | 216 | 55 |
| Embodiment 5-10 | 15 | 3 | 2 | 2 | 211 | 53 |

The Dv50 of electrolyte solution usually affects the cycle performance of the lithium-ion battery. It can be seen from embodiment 1-1, embodiment 5-1 to embodiment 5-5, and embodiment 5-9 to embodiment 5-10 that when the Dv50 of the negative active material and the single-sided area density of the negative material layer are within the range of this application, the lithium-ion battery has a great number of high-temperature intermittent cycles and a great number of normal-temperature cycles, which indicates good cycle performance of the lithium-ion battery.

The value of N1/N usually affects the cycle performance of the lithium-ion battery. It can be seen from Embodiment 1-1 and Embodiment 5-6 to Embodiment 5-8 that when the value of N1/N is within the range of this

application, the lithium-ion battery has a great number of high-temperature intermittent cycles and a great number of normal-temperature cycles, which indicates good cycle performance of the lithium-ion battery.

It should be noted that the terms "comprising", "including" or any other variants thereof here are intended to cover non-exclusive inclusions, such that a process, a method or an article including a series of elements not only includes these elements, but also includes other elements that are not listed definitely, or further includes inherent elements for such process, method, or article.

The embodiments of this specification use relevant manners for description. The same or similar parts of the embodiments may refer to each other, and each embodiment highlights the differences from other embodiments.

The above description is only the preferred embodiment of this application and is not be used to limit this application. Any modifications, equivalent replacements, improvements, etc. made within the spirit and principle of this application are to be included within the scope of protection of this application.

## Claims

1. A secondary battery, comprising: a positive electrode plate, a negative electrode plate, a separator and an electrolyte solution; wherein

   the negative electrode plate comprises a negative current collector and a negative material layer disposed on at least one surface of the negative current collector, **characterized in that**, the negative material layer comprises a negative active material, and a single-sided area density of the negative material layer is D g/1540.25 $mm^2$, $0.100 \leq D \leq 0.180$;
   the electrolyte solution comprises a fluoroethylene carbonate, based on a mass of the electrolyte solution, a mass percentage of the fluoroethylene carbonate is A1%, $4.2 \leq A1 \leq 14.8$; and

$$25 \leq A1/D \leq 100.$$

2. The secondary battery according to claim 1, **characterized in that**, the electrolyte solution further comprises an ethylene carbonate, a propylene carbonate and a propyl propionate; based on the mass of the electrolyte solution, a sum of mass percentages of the ethylene carbonate and the propylene carbonate is S1%, and a mass percentage of the propyl propionate is S2%, $7 \leq S1 \leq 12$, and $30 \leq S2 \leq 70$.

3. The secondary battery according to claim 2, **characterized in that**, based on the mass of the electrolyte solution, a mass percentage of the ethylene carbonate M1 is 2% to 9.5%, and a mass percentage of the propylene carbonate M2 is 2% to 9.5%.

4. The secondary battery according to claim 2, **characterized in that**, $200 \leq S2/D \leq 650$.

5. The secondary battery according to any one of claims 1 to 4, **characterized in that**, the electrolyte solution further comprises a compound having sulfur-oxygen double-bond, the compound having sulfur-oxygen double-bond comprises at least one selected from the group consisting of 1,3-propane sultone, ethylenesulfate, propylene sultone, 3-fluoro-1,3-propanesultone, 1,2-propane sultone, 1,4-butane sultone, 1,2-butane sultone, 1,3-butane sultone, 2,4-butane sultone and 1,3-pentane sultone; and
   based on the mass of the electrolyte solution, a mass percentage of the compound having sulfur-oxygen double-bond is S3%, $0.01 \leq S3 \leq 4.9$.

6. The secondary battery according to claim 5, **characterized in that**, $3 \leq S3 \leq 4.6$.

7. The secondary battery according to any one of claims 1 to 6, **characterized in that**, the electrolyte solution further comprises a nitrile compound, wherein the nitrile compound comprises at least one selected from the group consisting of malononitrile, succinonitrile, glutaronitrile, adipic dinitrile, pimelonitrile, suberonitrile, 3,3'-oxydipropionitrile, hex-2-enedinitrile, fumaronitrile, 2-pentenedinitrile, methylglutaronitrile, 4-cyanopilmonitrile, (Z)-1,2-dicyanoethylene, 2,2,3,3-tetrafluorosuccinonitrile, ethylene glycol bis(propionitrile)ether, 1,3,6-hexanetricarbonitrile, 1,3,5-pentanetricarbonitrile, heptanedinitrile,4-(2-cyanoethyl)- and 1,2,3-tris(2-cyanoethoxy)propane; and
   based on the mass of the electrolyte solution, a mass percentage of the nitrile compound is S4%, $2.6 \leq S4 \leq 8.2$.

8. The secondary battery according to any one of claims 2 to 6, **characterized in that**, the secondary battery satisfies at

least one of the following conditions:

(1) $4.2 \leq A1 \leq 8.5$;
(2) $26.7 \leq A1/D \leq 66.7$; or
(3) $32 \leq S2 \leq 59$.

**9.** The secondary battery according to any one of claims 2 to 6, **characterized in that**, the secondary battery satisfies at least one of the following conditions:

(1) $8.5 \leq A1 \leq 13.5$;
(2) $55.6 \leq A1/D \leq 76.9$; or
(3) $238 \leq S2/D \leq 580$.

**10.** The secondary battery according to any one of claims 1 to 9, **characterized in that**, the secondary battery satisfies at least one of the following conditions:

(1) the electrolyte solution comprises adipic dinitrile and ethylene glycol bis(propionitrile) ether;
(2) the electrolyte solution comprises ethylene carbonate, propylene carbonate and succinonitrile;
(3) the electrolyte solution comprises ethylene sulfate and adipic dinitrile; or
(4) the electrolyte solution comprises ethylene carbonate, propylene carbonate and 1,3,6-hexanetricarbonitrile.

**11.** The secondary battery according to any one of claims 1 to 10, **characterized in that**, a Dv50 of the negative active material is D1 μm, $5 \leq D1 \leq 25$.

**12.** The secondary battery according to claim 11, **characterized in that**, $0.8 \leq D \times D1 \leq 3.4$.

**13.** The secondary battery according to claim 11 or 12, **characterized in that**, $1 \leq D \times D1 \leq 3$.

**14.** The secondary battery according to any one of claims 1 to 13, **characterized in that**, a number of particles of the negative active material with a sphericity less than or equal to 0.6 and with a diameter less than or equal to 10 μm in the negative active material is N1, a total number of particles of the negative active material is N, $N1/N \times 100\% \leq 3\%$.

**15.** An electronic device, comprising the secondary battery according to any one of claims 1 to 14.